# FASCICULE DE BREVET EUROPEEN

(11) **EP 0 486 915 B1**
(45) Date de publication et mention de la délivrance du brevet: **20.12.1995**
(21) Numéro de dépôt: 91119173.2
(22) Date de dépôt: 11.11.1991
(51) Int. Cl.: H04L 12/26, H04L 12/56

(54) **Méthode de transmission d'information de contrôle pour liaison de transmission de cellules à multiplexage temporel asynchrone**
Verfahren zur Übertragung von Kontrollinformation über eine asynchrone Zeitmultiplexzellen übertragende Verbindung
Method of transmitting control information for an asynchronous time multiplex transmission link

(30) Priorité: 15.11.1990 FR 9014212
(43) Date de publication de la demande: 27.05.1992
(73) Titulaire: ALCATEL CIT, 75008 Paris (FR)
(72) Inventeur: Vinel, Paul, F-78140 Velizy (FR)
(74) Mandataire: Weinmiller, Jürgen

(56) Documents cités:
- WO-A-86/03642
- IEEE INFOCOM '90, THE CONFERENCE ON COMPUTER COMMUNICATIONS, NINTH ANNUAL JOINT CONFERENCE OF THE IEEE COMPUTER AND COMMUNICATIONS SOCIETIES, San Francisco,CA, 3-7 juin 1990, pages 105-115, IEEE, New York, US; S. DRAVIDA et al.: "Error performance of IEEE 802.6 metropolitan area networks"
- IEEE INTERNATIONAL CONFERENCE ON COMMUNICATIONS ICC '90, Atlanta, GA, 15-19avril 1990, vol. 3, pages 826-830, IEEE, New York, US; G. FIORETTO et al.: "ATM based network transport service"

## Description

La présente invention concerne une méthode de transmission d'information de contrôle pour liaison de transmission de cellules à multiplexage temporel asynchrone.

Une liaison de transmission de cellules à multiplexage temporel asynchrone est une liaison de transmission de signaux numériques acheminant des unités d'informations appelées cellules.

Ces cellules, quelquefois aussi appelées paquets, comprennent chacune une étiquette contenant une indication permettant d'identifier la destination de la cellule, ainsi que des données de communication.

Les cellules de plusieurs communications sont acheminées sur la liaison l'une après l'autre, dans un ordre quelconque.

Au cas où la liaison n'a pas à acheminer de cellule de communication, elle achemine une cellule vide, de même format qu'une cellule de communication, de sorte que, sur la liaison, des cellules se suivent sans discontinuer.

En dehors du fait que, dans le cadre d'une communication, la transmission puisse faire l'objet des mesures bien connues de détection et de correction d'erreurs de transmission, il importe, d'une manière générale, de prévoir des moyens permettant d'évaluer la qualité de toute liaison de transmission.

Cela peut se faire, de façon classique, en calculant, à l'émission un caractère de contrôle, en fonction de l'information transmise, en transmettant ce caractère de contrôle sur la liaison, en calculant, à la réception, un caractère de contrôle, en fonction de l'information reçue, la même qu'à l'émission, en comparant le caractère de contrôle ainsi calculé avec le caractère de contrôle transmis, tel qu'il est reçu de la liaison, toute différence entre eux indiquant une erreur qui est imputée aux conditions de la transmission.

Généralement, sur la liaison de transmission, l'information transmise est structurée, la structure en question comprenant un emplacement pour le caractère de contrôle, immédiatement ou peu après l'information en fonction de laquelle il a été calculé.

Une telle méthode de transmission de l'information de contrôle n'est pas applicable dans le cas de la transmission de cellules à multiplexage temporel asynchrone. En effet, l'information de transmission en fonction de laquelle doit être calculé le caractère de contrôle sera composée de cellules, et elle devra elle-même être transmise sous la forme de cellules. Or, on l'a vu, la liaison reçoit et doit acheminer des cellules qui se suivent sans discontinuer. Cela ne laisse pas de place pour l'information de contrôle.

Un système où le message à transmettre est divisé en cellules et où une information de contrôle est attachée à chacune de ces cellules est décrit dans IEEE INFOCOM′90, THE CONFERENCE ON COMPUTER COMMUNICATIONS, NINTH ANNUAL JOINT CONFERENCE OF THE IEEE COMPUTER AND COMMUNICATIONS SOCIETIES, San Francisko, CA, 3-7 juin 1990, pages 105-115, IEEE, NEW YORK; S.DRAVIDA et al.: "Error performance of IEEE 802.6 metropolitan area networks".

La présente invention a donc pour objet une méthode de transmission d'information de contrôle pour liaison de transmission de cellules à multiplexage temporel asynchrone selon laquelle l'information de contrôle produite par le processus de contrôle est transmise sous la forme de cellules de contrôle caractérisée en ce que, à l'émission, les cellules de contrôle obéissent à un format qui permet de les identifier en tant que telles, les cellules vides à transmettre sur la liaison sont identifiées, et toute cellule de contrôle à transmettre vient prendre sur la liaison la place d'une cellule vide qui n'est alors pas transmise, tandis que, à la réception, les cellules de contrôle sont détectées et extraites, pour être utilisées dans le processus de contrôle, et sont remplacées, en tant que de besoin, par des cellules vides.

Une telle solution pour être appliquée selon l'art antérieur, de la façon décrite plus haut, exigerait qu'une cellule vide soit disponible, sitôt qu'une cellule de contrôle est prête pour la transmission. Il n'y a aucune raison qu'il en soit ainsi.

Selon une autre caractéristique de l'invention, le processus de contrôle est mis en suspens, après qu'une cellule de contrôle ait été préparée, pour une période de temps qui correspond à l'intervalle entre le moment où la cellule de contrôle est prête et celui où elle est transmise.

Une telle solution revient à n'effectuer qu'un contrôle statistique de la qualité de transmission de la liaison. On peut bien sûr souhaiter opérer un contrôle plus complet.

Selon une autre caractéristique de l'invention, sitôt qu'une cellule de contrôle est prête, à l'émission, elle est enregistrée, dans l'attente d'une cellule vide, tandis que le processus de contrôle est réinitialisé, puis, lorsqu'une cellule vide se présente, cette dernière est remplacée par la cellule de contrôle enregistrée, une nouvelle cellule de contrôle est enregistrée, et le processus de contrôle est à nouveau réinitialisé, tandis que, à la réception, le processus de contrôle est réinitialisé à la réception de chaque cellule de contrôle.

Selon une autre caractéristique de l'invention, le processus de contrôle comprend une durée minimale de contrôle avant laquelle aucune réinitialisation ne prend place.

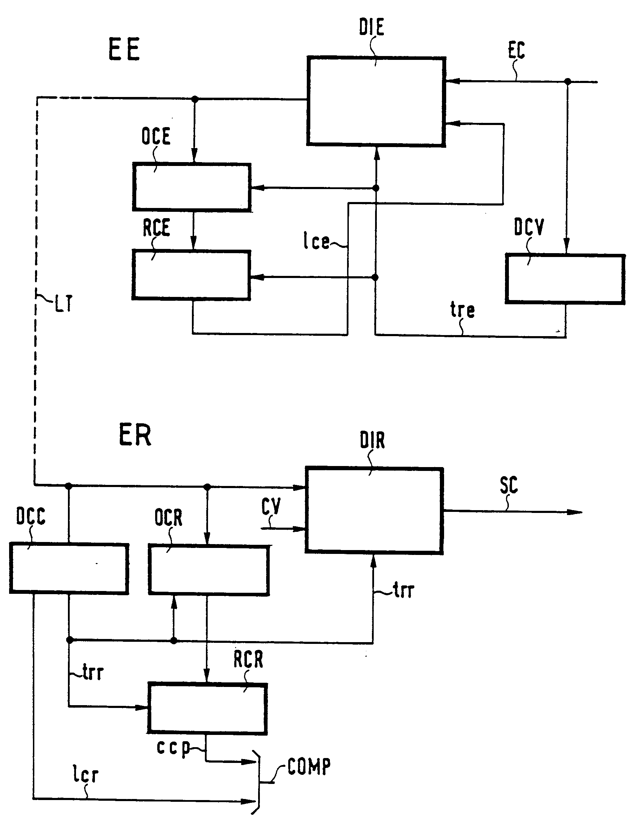

Les différents objets et caractéristiques de l'invention seront maintenant exposés de façon plus détaillée dans la description qui va suivre d'un mode de mise en oeuvre de la présente invention, faite en se référant à la figure annexée qui représente le diagramme d'un équipement de liaison conçu pour la mise en oeuvre de l'invention.

L'équipement représenté à la figure annexée comprend une extrémité d'émission EE connectée à une extrémité de réception ER par une liaison LT. L'ensemble de cet équipement comprend plus particulièrement, en série, une entrée de cellules à transmettre EC, un dispositif d'insertion à l'émission DIE, la liaison de transmission LT, un dispositif d'insertion à la réception DIR et une sortie de cellules reçues SC.

L'entrée de cellules EC fournit un train de cellules contiguës, à multiplexage temporel asynchrone, comprenant des cellules de communications et des cellules vides. La proportion de cellules vides dépend du trafic. Elle n'est jamais nulle.

Le dispositif d'insertion à l'émission DIE établit normalement la continuité entre l'entrée de cellules EC et la liaison LT, toutes les cellules de l'entrée de cellules EC étant transmises sur la liaison LT, mais permet occasionnellement le remplacement d'une cellule vide par une cellule de contrôle, comme on le verra ultérieurement.

La liaison LT achemine les cellules à multiplexage temporel asynchrone.

Le dispositif d'insertion à la réception DIR établit normalement la continuité entre la liaison de transmission LT et la sortie de cellule SC, toutes les cellules de la liaison LT étant transmises sur la sortie SC, mais permet occasionnellement le remplacement d'une cellule de contrôle par une cellule vide, comme on le verra ultérieurement.

L'extrémité émission comprend encore un détecteur de cellule vide DCV, un opérateur de contrôle émission OCE et un registre de cellule de contrôle émission RCE.

Le détecteur de cellule vide DCV identifie toute cellule vide sur l'entrée de cellules EC. Lorsqu'est venu le moment de transmettre une cellule de contrôle, déjà prête dans le registre de cellule de contrôle émission RCE, et après avoir détecté la survenance d'une cellule vide sur la liaison EC, il produit une signal tre qui est adressé au dispositif d'insertion à l'émission DIE. Ce dernier, qui vient de recevoir la cellule vide et allait la transmettre sur la liaison LT, la remplace par la cellule qui lui est fournie sur la liaison lce par le registre de cellule de contrôle émission RCE.

L'opérateur de contrôle émission OCE couplé à la sortie du dispositif d'insertion à l'émission DIE reçoit l'information transmise sur la liaison LT, applique un processus de contrôle et établit dans ce cadre une information de contrôle qui est destinée à une cellule de contrôle. Dans une étape antérieure, il a ainsi contribué à la préparation de la cellule de contrôle dont on vient de décrire la transmission sur la liaison LT, qu'il a fournie au registre de cellule de contrôle émission RCE. Le signal tre lui indique que la cellule dont la transmission commence est la dernière sur laquelle doit porter le processus de contrôle en cours. A l'issue de la transmission de cette cellule, ce processus en cours doit être arrêté et réinitialisé.

Le registre RCE reçoit également le signal tre. A l'issue de la transmission de la cellule en cours, le registre RCE enregistrera la cellule de contrôle fournie par l'opérateur de contrôle émission OCE, juste avant que ce dernier soit réinitialisé.

On voit que, à l'émission, le processus de contrôle commence lors d'une réinitialisation provoquée par le signal tre. Il s'arrête lors du signal tre suivant alors que vient d'être transmise une cellule de contrôle antérieure. L'information de contrôle qui en résulte compose une cellule de contrôle courante, laquelle est enregistrée dans le registre de cellule de contrôle émission RCE pour être transmise plus tard, en remplacement d'une cellule vide. Cette cellule de contrôle possède un format particulier qui permet de la reconnaître en tant que telle.

Ce processus pourrait se répéter à chaque cellule vide. Mais il aurait pour effet de supprimer les cellules vides de la liaison LT et d'engendrer une activité de contrôle persistante, ces deux aspects pouvant être considérés comme perturbateurs à l'égard de la transmission normale, donc indésirables.

Une solution simple consiste à interrompre le processus lorsqu'une cellule de contrôle est prête et jusqu'à ce qu'elle ait été transmise. Mais elle comporte l'inconvénient, en période de fort trafic, de ne permettre qu'une évaluation statistique de la qualité de transmission. L'invention prévoit donc d'introduire une constante de temps, par exemple, dans le détecteur de cellule vide DCV, afin que celui-ci ne produise le signal tre, à la détection d'une cellule vide, qu'à la condition qu'un intervalle de temps minimal déterminé se soit écoulé depuis la fourniture du précédent signal tre.

On remarquera que l'intervalle de temps qui sépare la production d'un signal tre, donc l'envoi d'une cellule de contrôle, de la production à nouveau de ce signal et de l'envoi d'une cellule de contrôle suivante, s'il possède ainsi une durée minimale, n'a pas de durée maximale déterminée. Il ne peut en être autrement, dans le cadre de l'exemple décrit. Le processus de contrôle en cours se poursuit alors et sera simplement moins efficace.

L'extrémité de réception ER comprend quant à elle un détecteur de cellule de contrôle DCC, un opérateur de contrôle réception OCR et un registre de cellule de contrôle réception RCR.

Le détecteur de cellule de contrôle DCC reçonnaît chaque cellule de contrôle, la fournit sur une liaison lcr et, à la fin de celle-ci, produit le signal trr.

L'opérateur de contrôle réception OCR couplé à la liaison LT reçoit l'information transmise sur cette liaison LT, applique le même processus de contrôle qu'à l'émission et établit dans ce cadre une information de contrôle pour une cellule de contrôle. Dans une étape antérieure, il a ainsi contribué à la préparation d'une cellule de contrôle qui doit être conforme à celle dont on vient de décrire la réception sur la liaison LT, cellule qu'il a fournie au registre de cellule de contrôle réception RCR. Le signal trr lui indique que la cellule dont la réception vient de se terminer est la dernière sur laquelle doit porter le processus de contrôle en cours. Ce processus en cours est arrêté et réinitialisé.

Le registre RCR reçoit également le signal trr. Le registre RCR enregistre la cellule de contrôle fournie par l'opérateur de contrôle réception OCR, juste avant que ce dernier soit réinitialisé.

Un dispositif de comparaison COMP non représenté reçoit la cellule de contrôle reçue, fournie par le dispositif DCC sur la liaison lcr. Avant que la sortie du registre de cellule de contrôle RCR n'ait changé, en réponse au signal lce, le dispositif de comparaison COMP reçoit également la cellule de contrôle ccp antérieurement établie par l'opérateur OCR. Ces deux cellules doivent être identiques. En cas de disparité, le dispositif COMP signalera une erreur de transmission. L'analyse de telles signalisations permettra d'évaluer la qualité de transmission sur la liaison LT.

Par ailleurs, on a mentionné à la figure une branche de la liaison trr en direction du dispositif d'insertion à la réception DIR. Ces dispositions serviront, autant que de besoin, au remplacement de la cellule de contrôle, dans l'information de transmission reçue, par une cellule vide CV, rétablissant ainsi le flux de données sur la sortie SC, tel qu'il était sur l'entrée EC.

On voit que, à la réception, le processus de contrôle commence lors d'une réinitialisation provoquée par le signal trr. Il s'arrête lors du signal trr suivant, alors que vient d'être reçue une cellule de contrôle antérieurement établie à l'émission. La cellule de contrôle résultant de ce processus est enregistrée dans le registre RCR. Elle est désormais à la disposition du dispositif de comparaison COMP. A la réception de la cellule de contrôle suivante, transmise par la liaison LT, cette cellule reçue est fournie au dispositif de comparaison COMP qui peut signaler toute disparité, c'est-à-dire toute erreur dans la transmission sur la liaison LT. Bien entendu, l'erreur pourrait porter sur la transmission de la cellule de contrôle ou sur le fonctionnement de l'équipement de contrôle. La probabilité de telles erreurs étant considérablement plus faible, on n'en tiendra pas compte.

Bien entendu, dans ce qui précède, toutes les fois qu'il est question d'enregistrer ou de traiter une cellule de contrôle, il va de soi que, pour économiser le temps ou les équipements, on peut se borner à enregistrer ou traiter seulement l'information de cette cellule utile au processus dans lequel la cellule intervient.

D'une manière générale, il est bien évident que les descriptions qui précèdent n'ont été données qu'à titre d'exemple non limitatif et que de nombreuses variantes peuvent être envisagées, sans sortir pour autant du cadre de l'invention. En particulier, l'équipement décrit, pour la mise en oeuvre de l'invention peut être réalisé sous bien d'autres formes et notamment sous la forme d'un processeur à programme enregistré intégrant les fonctions décrites avec d'autres, relatives aussi à la liaison à multiplexage temporel asynchrone.

## Revendications

1. Méthode de transmission d'information de contrôle pour liaison de transmission de cellules à multiplexage temporel asynchrone selon laquelle l'information de contrôle produite par le processus de contrôle (OCE) est transmise sous la forme de cellules de contrôle, caractérisée en ce que, à l'émission, les cellules de contrôle obéissent à un format qui permet de les identifier en tant que telles, les cellules vides à transmettre sur la liaison sont identifiées (DCV), et toute cellule de contrôle à transmettre (RCE,lce) vient prendre sur la liaison (LT) la place d'une cellule vide qui n'est alors pas transmise, tandis que, à la réception, les cellules de contrôle sont détectées et extraites (DCC), pour être utilisées dans le processus de contrôle (OCR,RCR,COMP), et sont remplacées, en tant que de besoin, par des cellules vides (DIR).

2. Méthode de transmission d'information de contrôle pour liaison de transmission de cellules à multiplexage temporel asynchrone conforme à la revendication 1, caractérisée en ce que le processus de contrôle est mis en suspens, après qu'une cellule de contrôle ait été préparée, pour une période de temps qui correspond à l'intervalle entre le moment où la cellule de contrôle est prête et celui où elle est transmise.

3. Méthode de transmission d'information de contrôle pour liaison de transmission de cellules à multiplexage temporel asynchrone conforme à la revendication 1, caractérisée en ce que, sitôt qu'une cellule de contrôle est prête, à l'émission, elle est enregistrée, dans l'attente d'une cellule vide, tandis que le processus de contrôle est réinitialisé, puis, lorsqu'une cellule vide se présente, cette dernière est remplacée par la cellule de contrôle enregistrée, une nouvelle cellule de contrôle est enregistrée, et le processus de contrôle est à nouveau réinitialisé, tandis que, à la réception, le processus de contrôle est réinitialisé à la réception de chaque cellule de contrôle.

4. Méthode de transmission d'information de contrôle pour liaison de transmission de cellules à multiplexage temporel asynchrone conforme à la revendication 3, caractérisée en ce que le processus de contrôle comprend une durée minimale de contrôle avant laquelle aucune réinitialisation ne prend place.

## Patentansprüche

1. Methode zur Übertragung von Kontrollinformationen für eine Übertragung von Zellen mit asynchroner Zeitmultiplexierung, wobei die Kontrollinformation, die vom Kontrollprozeß (OCE) erzeugt wird, in Form von Kontrollzellen übertragen wird, dadurch gekennzeichnet, daß auf der Sendeseite die Kontrollzellen ein Format besitzen, das sie als solche zu identifizieren erlaubt, daß die über die Übertragungsstrecke zu übertragenden Leerzellen identifiziert werden (DCV) und daß jede zu übertragende Kontrollzelle (RCE, lce) den Platz einer dann nicht übertragenen Leerzelle auf der Übertragungsstrecke (LT) einnimmt, während auf der Empfangsseite die Kontrollzellen erkannt und entnommen werden (DCC), um im Kontrollprozeß (OCR, RCR, COMP) verwendet zu werden, und ggf. durch Leerzellen wieder ersetzt zu werden (DIR).

2. Methode zur Übertragung von Kontrollinformationen für die Übertragung von Zellen mit asynchroner Zeitmultiplexierung nach Anspruch 1, dadurch gekennzeichnet, daß der Kontrollprozeß nach der Vorbereitung einer Kontrollzelle für eine Zeitdauer ausgesetzt wird, die dem Zeitintervall zwischen dem Zeitpunkt entspricht, an dem die Kontrollzelle bereit ist, und dem Zeitpunkt, an dem sie übertragen wird.

3. Methode zur Übertragung von Kontrollinformationen für die Übertragung von Zellen mit asynchroner Zeitmultiplexierung nach Anspruch 1, dadurch gekennzeichnet, daß eine Kontrollzelle, sobald sie bereit ist, gespeichert wird und auf eine Leerzelle wartet, während der Kontrollprozeß erneut gestartet wird, worauf eine auftretende Leerzelle durch die gespeicherte Kontrollzelle ersetzt wird, und daß eine neue Kontrollzelle gespeichert wird und der Kontrollprozeß erneut gestartet wird, während auf der Empfangsseite der Kontrollprozeß bei Empfang jeder Kontrollzelle neu gestartet wird.

4. Methode zur Übertragung von Kontrollinformationen für die Übertragung von Zellen mit asynchroner Zeitmultiplexierung nach Anspruch 3, dadurch gekennzeichnet, daß der Kontrollprozeß eine Mindestkontrolldauer aufweist, während der kein Neubeginn stattfindet.

## Claims

1. Asynchronous time-division multiplex cell transmission link control information transmission method in which the control information produced by the control process (OCE) is transmitted in the form of control cells, characterised in that, at the transmitting end, the control cells conform to a format enabling them to be identified as such, the empty cells to be transmitted on the link are identified (DCV) and any control cell to be transmitted (RCE, lce) is substituted on the link (LT) for an empty cell which is then not transmitted, whereas at the receiving end the control cells are detected and extracted (DCC) to be used in the control process (OCR, RCR, COMP) and are replaced, as required, with empty cells (DIR).

2. Asynchronous time-division multiplex cell transmission link control information transmission method according to claim 1 characterised in that the control process is suspended after a control cell has been prepared for a period of time representing the time interval between the time at which the control cell is ready and that at which it is transmitted.

3. Asynchronous time-division multiplex cell transmission link control information transmission method according to claim 1 characterised in that immediately a control cell is ready to be transmitted it is stored pending the availability of an empty cell, the control process is reinitialised and when an empty cell is available it is replaced by the stored control cell, a new control cell is stored and the control process is again reinitialised, whereas at the receiving end the control process is reinitialised on receiving each control cell.

4. Asynchronous time-division multiplex cell transmission link control information transmission method according to claim 3 characterised in that the control process comprises a minimum control time period before which no reinitialisation can take place.
